# EUROPEAN PATENT SPECIFICATION

(11) **EP 1 864 858 B1**
(45) Date of publication and mention of the grant of the patent: **10.12.2008**
(21) Application number: 07010978.0
(22) Date of filing: 04.06.2007
(51) Int. Cl.: B60Q 1/56

(54) **Installation structure and installation method of garnish and appliance**
Installationsstruktur und Verfahren zum Installieren von Verkleidung und Gerät
Structure d'installation et méthode d'installation de garniture et appareil

(30) Priority: 06.06.2006 JP 2006157140
(43) Date of publication of application: 12.12.2007
(73) Proprietor: HONDA MOTOR CO., LTD., Tokyo 107-8556 (JP)
(72) Inventor: Miyake, Yoshinori, Wako-shi Saitama (JP); Fukura, Koji, Wako-shi Saitama (JP)
(74) Representative: Prechtel, Jörg

(56) References cited:
- US-A- 3 754 131
- US-A- 4 318 161
- US-A- 4 345 307
- US-A- 4 356 536

## Description

### BACKGROUND OF THE INVENTION

Priority is claimed on Japanese Patent Application No. 2006-157140, filed June 6, 2006.

### Field of the Invention

The present invention relates to an installation structure and an installation method of a garnish and an appliance.

### Description of the Related Art

There are vehicles which employ an installation structure in which: a garnish is attached to a body panel such as a rear door; and an appliance such as lamplights or a camera is housed in an appliance-installation hole formed in the garnish. In this kind of vehicle, since the appliance is somewhat heavy, an installation structure is employed in which the appliance is independently attached to the vehicle body panel, in addition to the garnish (refer to, for example, Japanese Unexamined Patent Application, First Publication No. 2005-178441).

However, in such conventional installation structures, since the garnish and the appliance are attached to the body panel so as to be independent with each other, a dispersion easily occurs in a gap at a connection between the appliance and the appliance-installation hole of the garnish due to processing errors of the garnish and the appliance, and installation errors and the like. If such dispersion occurs in a gap between the appliance and the appliance-installation hole of the garnish, there was a possibility in that the appearance thereof, when it is seen from the outside, is deteriorated; and therefore, the product quality in the design of the vehicle is also deteriorated.

Document US 4 318 161 also discloses a garnish and appliance-installation structure according to the prior art.

The present invention has conceived the above-mentioned circumstances and has an object of providing an installation structure and an installation method of a garnish and an appliance that enables reducing a gap between a garnish and an appliance to improve the design quality of a vehicle.

### SUMMARY OF THE INVENTION

The present invention employed the followings in order to achieve the above object.

That is, the present invention employs an installation structure of a garnish and an appliance for attaching the garnish having an appliance-installation hole and the appliance that is to be disposed in the appliance-installation hole, to a vehicle body panel, wherein: the vehicle body panel is provided with the appliance-installation hole into which the appliance is inserted; the appliance is inserted into the appliance-installation hole to be positioned in the garnish by a positional arrangement restricting device; the appliance engages with the vehicle body panel so as to be movable therefrom for a predetermined amount; and the garnish is fixed to the vehicle body panel.

According to the installation structure of a garnish and an appliance, the positional adjustment between the appliance-installation hole of the garnish and the appliance is performed by the positional arrangement restricting device; and in this state, the garnish is fixed to the vehicle body panel. At this time, the appliance engages with the vehicle body panel so as to be movable therefrom for a predetermined amount, and is attached to the vehicle body panel with reference to the connection between the garnish and the vehicle body panel.

Accordingly, the garnish and the appliance can be installed on the vehicle body panel without having dispersion in a gap between the garnish and the appliance. Therefore, the connection between the garnish and the appliance can be precisely fitted while enabling supporting the garnish and the appliance by the vehicle body panel so as to be independent with each other. As a result, the appearance quality of the vehicle can be improved.

The positional arrangement restricting device may be provided at plural locations between the appliance and the appliance-installation hole of the garnish.

In this case, movements between the appliance and the appliance-installation hole are restricted at plurality of locations and both of them are aligned precisely.

Accordingly, since the dimension of the gap between the appliance exposed to the outside of the vehicle and the appliance-installation hole of the garnish is precisely controlled by the plurality of positional arrangement restricting devices, the appearance quality of the vehicle can be further improved.

It may be arranged such that the appliance be held by a collar so as to be movable therefrom for a predetermined amount, while the collar be fixed to the vehicle body panel.

In this case, the appliance is held by the vehicle body panel via the collar fixed to the vehicle body panel, so as to be movable for a predetermined amount therefrom.

Accordingly, the appliance can be engaged with the vehicle body panel so as to be movable therefrom, with a simple construction. In addition, while engaging the appliance with the vehicle body panel, excessive fixing force will not be applied directly to the appliance.

The sealer may be sandwiched between the appliance and an around of the appliance-installation hole.

In this case; the sealer can reliably prevent water drops reaching through the appliance-installation hole of the vehicle body panel, to a backside of the vehicle body panel.

The present invention also employs an installation method of a garnish and an appliance for attaching the garnish having an appliance-installation hole and the appliance that is to be disposed in the appliance-installation hole, to a vehicle body panel. The installation method of a garnish and an appliance includes: providing the appliance-installation hole into which the appliance is inserted, to the vehicle body panel ; inserting the appliance into the appliance-installation hole; engaging the appliance with the vehicle body panel so as to be movable therefrom for a predetermined amount; performing a positional adjustment between the appliance and the garnish; and fixing the garnish to the vehicle body panel.

According to the installation method of a garnish and an appliance, the appliance engages with the vehicle body panel so as to be movable therefrom for a predetermined amount, and is attached to the vehicle body panel with reference to the connection between the garnish and the vehicle body panel. In addition, the appliance is precisely aligned with respect to the appliance-installation hole of the garnish.

Accordingly, the garnish and the appliance can be installed on the vehicle body panel without having dispersion in a gap between the garnish and the appliance. Therefore, the connection between the garnish and the appliance can be precisely fitted while enabling supporting the garnish and the appliance by the vehicle body panel so as to be independent with each other. As a result, the appearance quality of the vehicle can be improved.

### BRIEF DESCRIPTION OF THE DRAWINGS

FIG. 1 shows an exploded perspective view of one embodiment of the present invention.
FIG. 2 shows a cross-sectional view of the same embodiment, taking along a line A-A of FIG. 1.
FIG. 3 shows a cross-sectional view of the same embodiment, taking along a line G-G of FIG. 1.
FIG. 4 shows an enlarged view of a portion B in FIG. 3.
FIG. 5 shows an enlarged view of a portion C in FIG. 3.
FIG. 6 shows an enlarged view of a portion D in FIG. 3.
FIG. 7 shows a front view of the same embodiment.
FIG. 8 shows a cross-sectional view of the same embodiment, taking along a line E-E of FIG. 7.
FIG. 9 shows a cross-sectional view of the same embodiment, taking along a line F-F of FIG. 8.

### DETAILED DESCRIPTION OF THE INVENTION

An embodiment of the present invention will be explained below with reference to the drawings.

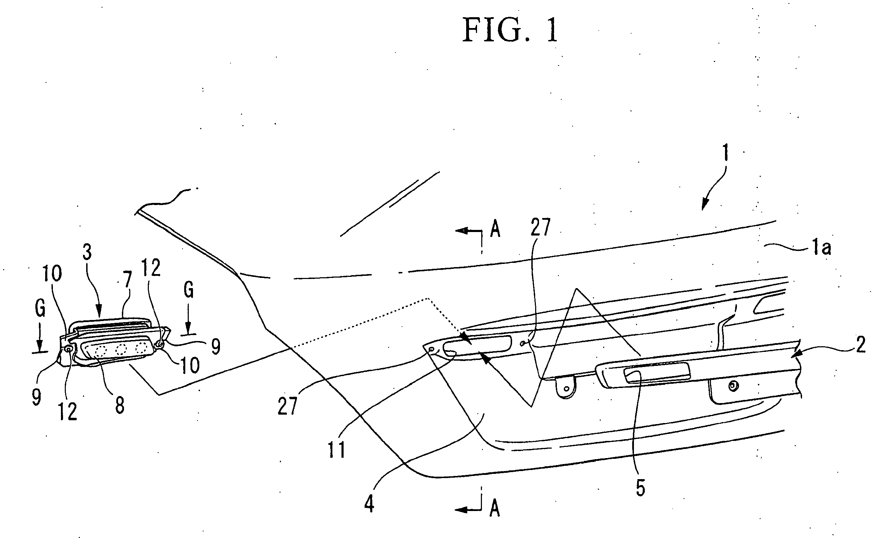

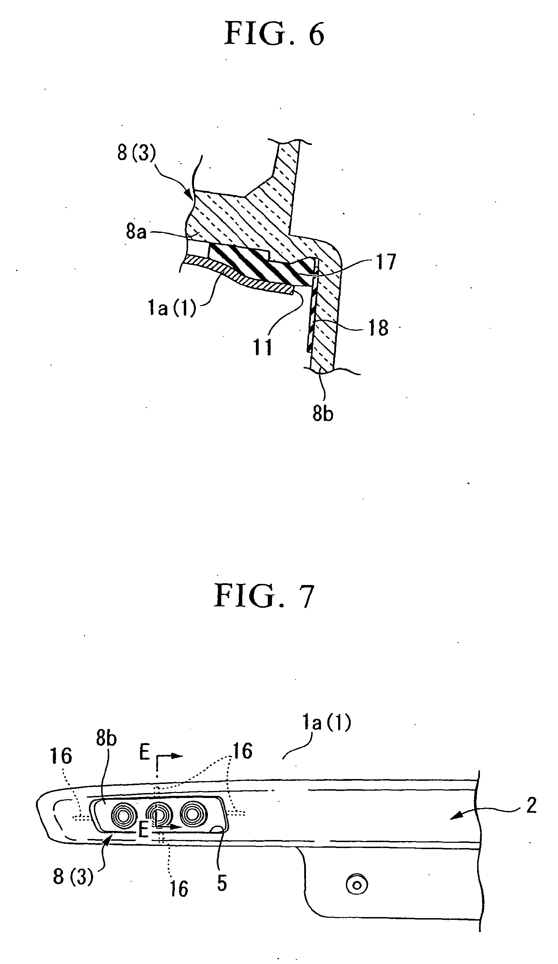

FIG. 1 shows an exploded perspective view of a rear body (a trunk lid 1) for explaining a specific example of an installation structure of a garnish and an appliance, according to the present embodiment. FIG. 7 shows a front view of the rear body seen from the rearward of a vehicle.

In these drawings, the reference symbol 1 denotes the trunk lid that is openably and closably attached to a trunk room (not shown in the figures) of the rear body; the reference symbol 2 denotes a license garnish that is attached to an exterior of a lid outer panel 1a (a vehicle body panel) of the trunk lid 1; and the reference symbol 3 denotes a rear fog lamp (an appliance) to be attached to the lid outer panel 1a together with the license garnish 2.

A recessed portion 4 is formed on an exterior of the lid outer panel 1a facing to the rear side of the vehicle, so as to extend along the vehicle-width direction; and a license plate (not shown in the figures) is to be attached to a substantial center of the recessed portion 4. A resin-made license garnish 2 that extends along the vehicle-width direction is to be attached to an upper region in the recessed portion 4.

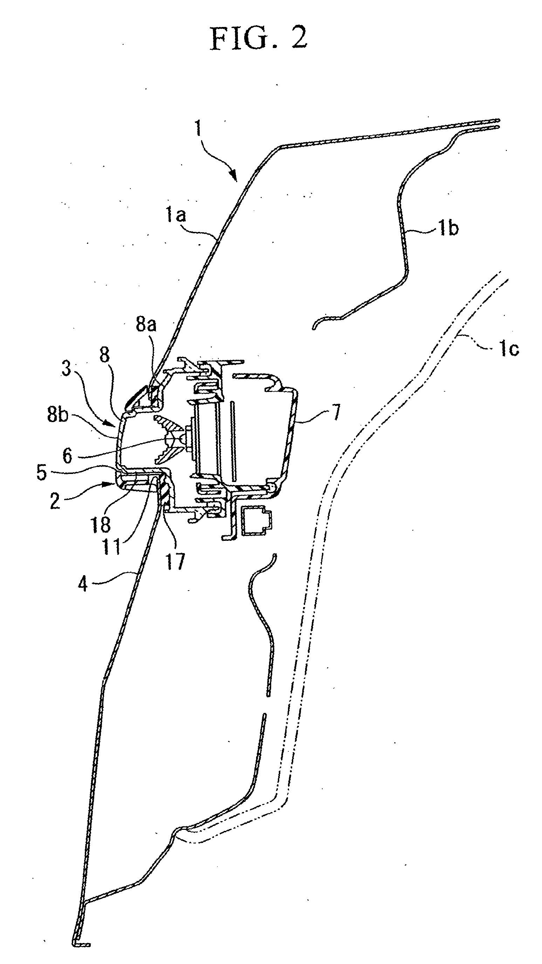

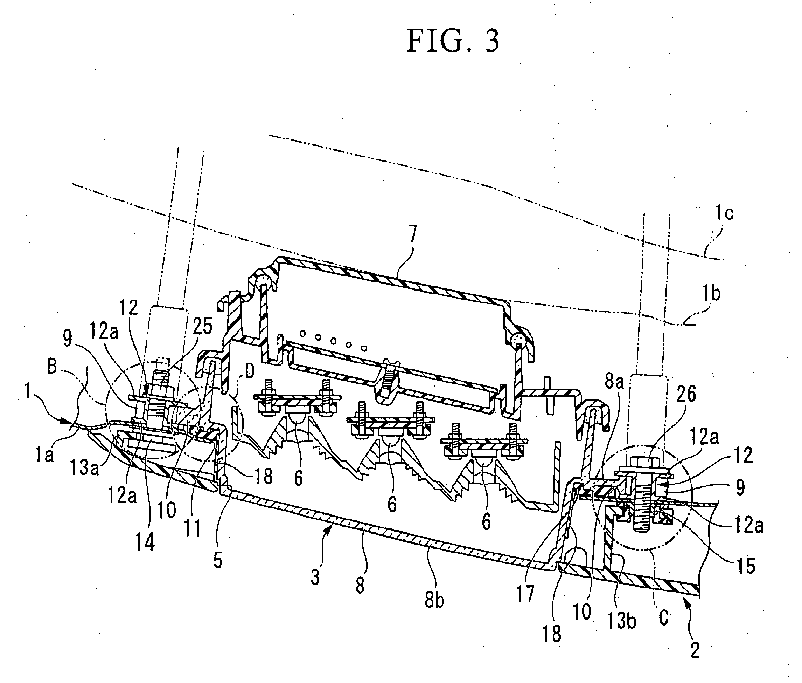

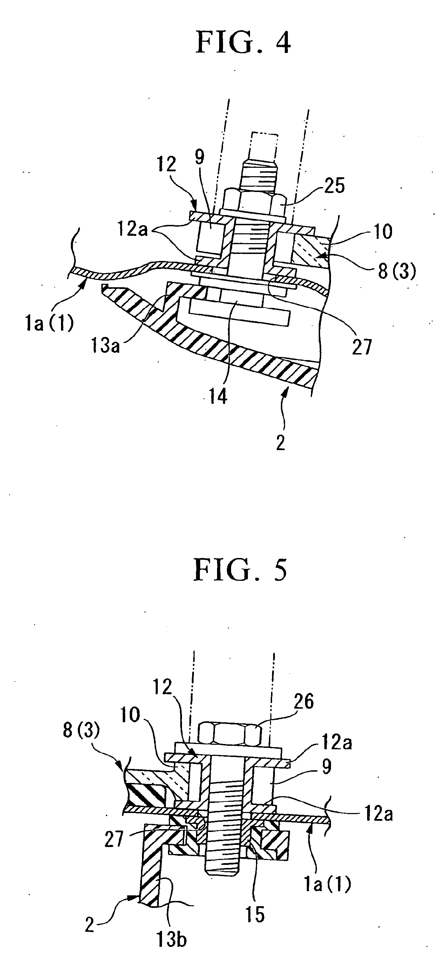

Appliance-installation holes 5 each extending along the vehicle-width direction to form a long hole are formed in the license garnish 2 in the vicinity of two ends thereof; and an after-mentioned cover main body 8b of the rear fog lamp 3 is assembled in each of the appliance-installation holes 5. As shown in FIGS. 2 to 5, appliance-installation holes 11 are formed in the lid outer panel 1a at a position that corresponds to the appliance-installation holes 5 of the license garnish 2; and the cover main bodies 8b of the rear fog lamp 3 are inserted from a rear side of the lid outer panel 1a into the appliance-installation holes 11. Moreover, the reference symbol 1b in FIGS. 2 and 3 denotes a lid inner panel of the trunk lid 1, while the reference symbol 1c denotes a lid lining of the trunk lid 1.

As shown in FIGS. 2 and 3, the rear fog lamp 3 is provided with: a lamp body 7 that holds plural fog lamp bulbs 6; and a colored resin-made front cover 8 that is fittingly fixed to a front face of the lamp body 7. The front cover 8 is provided with the cover main body 8b that expands from a base portion 8a therearound toward the vehicle forward side to cover the front side of the fog lamp bulbs 6. As mentioned in the above, the cover main body 8b is inserted into the appliance-installation hole 11 of the lid outer panel 1a and also into the appliance-installation hole 5 of the license garnish 2; and a front face thereof is exposed to the exterior (i.e., the rearward of the vehicle) of the license garnish 2 through the appliance-installation hole 5. In addition, the base portion 8a is provided with a pair of installation flanges 10, 10 each having a U-shaped hole 9 and extending in the car width direction therefrom; and metal collars 12 are slidably engages with the U-shaped holes 9 of the installation flanges 10, 10. Engaging flanges 12a, 12a that extend outward in the radial direction thereof are provided at two ends of the collars 12; a shaft portion between the engaging flanges 12a, 12a slidably engages with the corresponding U-shaped hole 9; and the engaging flanges 12a, 12a prevent slipping out of the collar 12 in the axial direction thereof.

On the other hand, the license garnish 2 is provided with brackets 13a, 13b so as to extend from two edges in the car width direction of the appliance-installation hole 5; and a stud bolt 14 and a buried nut 15 are fixed at the brackets 13a, 13b. More specifically, the stud bolts 14 are fixed at the brackets 13a on the outside in the car width direction of the appliance-installation holes 5, while the buried nuts 15 are fixed at the brackets 13b on the inside in the car width direction of the appliance-installation holes 5. Moreover, the reference symbol 25 denotes a nut that is screwed with a distal end of the stud bolt 14; the reference symbol 26 denotes a bolt that is screwed with the buried nut 15; and the reference symbol 27 denotes a bolt-insertion hole of the lid outer panel 1a, through which the stud bolt 14 and the bolt 26 are inserted.

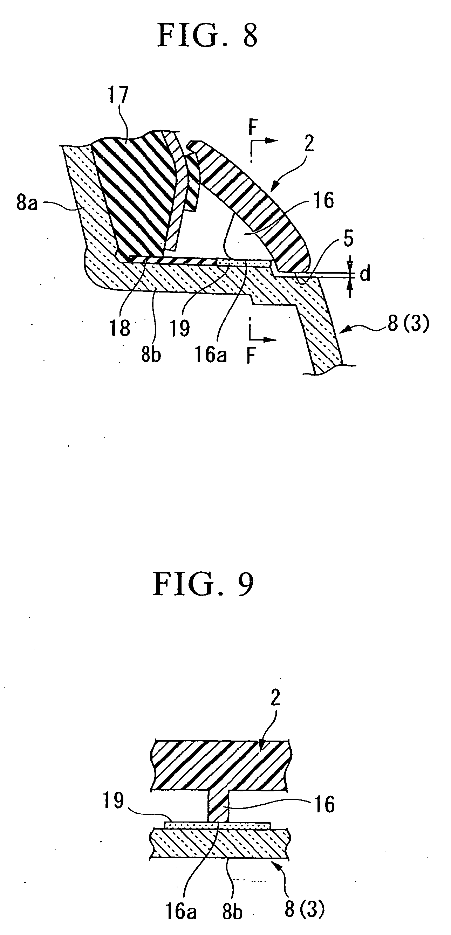

As shown in FIGS. 7 to 9, plural ribs 16 being a positional arrangement restricting device are provided so as to protrude from edges on the backside of the appliance-installation hole 5 of the license garnish 2; and these ribs 16 perform a positional adjustment of the cover main body 8b of the rear fog lamp 3 with respect to the license garnish 2. As shown in FIG. 7, the ribs 16 are provided, for example, at each of the four sides of the substantially rectangular-shaped appliance-installation hole 5. As shown in FIG. 8, each of the ribs 16 is formed in substantially a triangular shape, and has a guiding face 16a that contacts the exterior of the cover main body 8b that is to be inserted into the appliance-installation hole 5. The guiding faces 16a of the ribs 16 abut the exterior of the cover main body 8b to maintain a constant gap "d" (refer to FIG. 8) between the cover main body 8b and the appliance-installation hole 5. A nonwoven fabric 19 is adhered to a portion of the exterior of the cover main body 8b, where the ribs 16 abut; and the nonwoven fabric 19 absorbs the generation of noises and the dispersion that occurs between the products.

A sealer 17 is provided from a bottom of the cover main body 8b of the rear fog lamp 3 to a front face of the base portion 8a, so as to surround the around of the cover main body 8b; and the base portion 8a is pressed toward a back face of the lid outer panel 1a while sandwiching the sealer 17 therewith. The sealer 17 closes in a watertight manner between the appliance-installation hole 11 of the lid outer panel 1a and the rear fog lamp 3, and thereby prevents water drops coming to the backside of the lid outer panel 1a through the appliance-installation hole 11.

Furthermore, a solid rubber 18 is attached onto the exterior of the cover main body 8b so as to cover it; and this solid rubber 18 prevents damages on the cover main body 8b during assembling the cover main body 8b, and also prevents light leaking from the exterior of the cover main body 8b to therearound.

When attaching the license garnish 2 and the rear fog lamps 3 to the lid outer panel 1a: firstly, the license garnish 2 is disposed on the outside of the lid outer panel 1a; the stud bolts 14 protruding from portions near two ends of the license garnish 2 are inserted into a corresponding bolt-insertion hole 27 of the lid outer panel 1a; and in this situation, the rear fog lamps 3 are attached from the backside of the lid outer panel 1a.

At this time, in the rear fog lamps 3, firstly, the cover main body 8b of the front cover 8 is inserted into the appliance-installation hole 11, while a distal end of the stud bolts 14 protruding from the bolt-insertion holes 27 of the lid outer panel 1a are engaged with a shaft hole of the collar 12. Then, in this state, the cover main bodies 8b of the front.covers 8 are further inserted into the appliance-installation hole 5 of the license garnish 2 to make the exterior of the front covers 8 abut the plural ribs 16 around the appliance-installation hole 5, and thereby performing the positional adjustment of the rear fog lamps 3. During this positional adjustment, the rear fog lamps 3 also move with respect to the stud bolts 14 protruding from the license garnish 2; however, the relational movements are permitted by a play in the engagement between the U-shaped hole 9 and the collar 12.

After the positional arrangements of the rear fog lamps 3 and the license garnish 2, the nuts 25 are subsequently screwed on the distal ends of the stud bolts 14, and the bolts 26 are screwed to the buried nuts 15 arranged on the inside in the car width direction of the rear fog lamps 3. As the result, each collar 12 is fittingly sandwiched between the lid outer panel 1a and the rear fog lamps 3; therefore, the rear fog lamps 3 engage with the lid outer panel 1a via the collars 12 while enabling a predetermined amount of movements. In addition, when the nuts 25 and the bolts 26 are screwed, the sealer 17 provided on the base portions 8a of the rear fog lamps 3 will tightly contact with an edge of the appliance-installation hole 11 from the backside of the lid outer panel 1a ; therefore, the sealer 17 will prevent water drops passing through the appliance-installation hole 11.

As has been explained in the above, according to this installation structure, the rear fog lamps 3 and the license garnish 2 are positioned via the ribs 16, while the rear fog lamps 3 engage with the lid outer panel 1a in reference to a connection between the license garnish 2 and the lid outer panel 1a; therefore, the rear fog lamps 3 can be precisely arranged to and assembled to the appliance-installation holes 5 of the license garnish 2. Furthermore, since the rear fog lamps 3 engage with the lid outer panel 1a while permitting the predetermined amount of relational movements thereof via the collar 12, the lid outer panel 1a can reliably supports the rear fog lamps 3 being a heavy object. Accordingly, by employing this installation structure, both of the reliable support of the rear fog lamps 3 and an improvement in the appearance quality can be obtained.

In addition, in the present embodiment, the plural ribs 16 protrude from the edge on the backside of the appliance-installation hole 5 of the license garnish 2 so as to surround the appliance-installation hole 5, while the plural ribs 16 also restrict the position of the rear fog lamps 3; therefore, it is possible to increase the positioning accuracy of the rear fog lamps 3 with respect to the license garnish 2.

Furthermore, in the present embodiment, the collars 12 engage with the U-shaped holes 9 of the rear fog lamps 3 so as to be movable therefrom, while the collars 12 are fixed between the lid outer panel 1a and the license garnish 2 by the stud bolts 14 and the nuts 25; therefore, the rear fog lamps 3 can reliably engage with the lid outer panel 1a with a simple structure, and furthermore, it is possible to prevent an excessive clamping force applied onto the rear fog lamp 3 beforehand.

Moreover, the present invention will not be limited only to the above-mentioned embodiment, and the various changes can be made thereto without departing from the spirit or scope of the present invention. For example, the above embodiment explains the case in which the rear fog lamps 3 being an appliance are assembled into the license garnish 2; however, the appliance is not limited only to the rear fog lamps 3 and may be others such as a camera. In addition, the garnish may be others except for the license garnish 2. Furthermore, the vehicle body panel will not be limited to the lid outer panel 1a of the trunk lid 1, and may be other panels of the vehicle body.

While a preferred embodiment of the invention has been described and illustrated above, it should be understood that this is an exemplary of the invention and is not to be considered as limiting. Accordingly, the invention is not to be considered as being limited by the foregoing description, and is only limited by the scope of the appended claims.

### [Explanations for Reference Symbols]

1a ... lid outer panel (vehicle body panel); 2 ... license garnish (garnish); 3 ... rear fog lamp (appliance); 5 ... appliance-installation hole; 11 ... appliance-installation hole; 12 ... collar; 16 ... rib (positional arrangement restricting device); 17 ... sealer

The present invention employs an installation structure of a garnish and an appliance for attaching the garnish having an appliance-installation hole and the appliance that is to be disposed in the appliance-installation hole, to a vehicle body panel, wherein: the vehicle body panel is provided with the appliance-installation hole into which the appliance is inserted; the appliance is inserted into the appliance-installation hole to be positioned in the garnish by a positional arrangement restricting device; the appliance engages with the vehicle body panel so as to be movable therefrom for a predetermined amount; and the garnish is fixed to the vehicle body panel.

## Claims

1. A garnish and appliance-installation structure for installing a garnish (2) and an appliance (3) to a vehicle body panel (1), wherein:
the garnish (2) is provided with a first appliance-installation hole (5) into which the appliance (3) is installed;
the vehicle body panel (1) is provided with a second appliance-installation hole (11) into which the appliance (3) is inserted;
the appliance (3) is inserted into the second appliance-installation hole (11) and is positioned in the garnish (2) by a positional arrangement restricting device (16);
the appliance (3) is engaged with the vehicle body panel (1) so as to be movable relative to the panel (1) for a predetermined amount; and the garnish (2) is fixed to the vehicle body panel (1).

2. The garnish and an appliance-installation structure according to claim 1, wherein
the positional arrangement restricting device (16) is provided at plural locations between the appliance (3) and the first appliance-installation hole (5) of the garnish (2).

3. The garnish and an appliance-installation structure according to claim 1 or 2, wherein
the appliance (3) is held by a collar (12) so as to be movable for a predetermined amount, while the collar (12) is fixed to the vehicle body panel (1).

4. The garnish and an appliance-installation structure according to any one of claims 1 to 3, wherein
a sealer (17) is sandwiched between the appliance (3) and an around of the second appliance-installation hole (11).

5. A garnish and appliance-installation method for installing a garnish (2) and an appliance (3) to a vehicle body panel (1), the garnish and appliance-installation method comprising the following steps:
providing the garnish (2) with a first appliance-installation hole (11),
providing the vehicle body panel (1) with a second appliance-installation hole (11) into which the appliance (3) is inserted,
inserting the appliance (3) into the second appliance-installation hole (11);
engaging the appliance (3) with the vehicle body panel (1) so as to be movable relative to the vehicle body panel (1) for a predetermined amount;
performing a positional adjustment between the appliance (3) and the garnish (2) by means of a positional arrangement restricting device (16), and
fixing the garnish (2) to the vehicle body panel (1).

## Patentansprüche

1. Verkleidung- und Gerät-Installationsstruktur zum Installieren einer Verkleidung (2) und eines Geräts (3) an einer Fahrzeugkarosserieplatte (1), wobei:
die Verkleidung (2) mit einem ersten Gerät-Installationsloch (5) versehen ist, in welches das Gerät (3) eingebaut ist;
wobei die Fahrzeugkarosserieplatte (1) mit einem zweiten Gerät-Installationsloch (11) versehen ist, in welches das Gerät (3) eingeführt ist;
wobei das Gerät (3) in das zweite Gerät-Installationsloch (11) eingeführt und durch eine Positionsanordnungsbegrenzungseinrichtung (16) in der Verkleidung (2) positioniert ist;
wobei das Gerät (3) mit der Fahrzeugkarosserieplatte (1) so in Eingriff ist, dass es relativ zu der Platte (1) um einen vorbestimmten Betrag beweglich ist; und wobei die Verkleidung (2) an der Fahrzeugkarosserieplatte (1) befestigt ist.

2. Verkleidung- und Gerät-Installationsstruktur nach Anspruch 1, wobei
die Positionsanordnungsbegrenzungseinrichtung (16) an einer Mehrzahl von Orten zwischen dem Gerät (3) und dem ersten Gerät-Installationsloch (5) der Verkleidung (2) vorgesehen ist.

3. Verkleidung- und Gerät-Installationsstruktur nach Anspruch 1 oder 2, wobei
das Gerät (3) durch eine Hülse (12) so gehalten ist, dass es um einen vorbestimmten Betrag beweglich ist, während die Hülse (12) an der Fahrzeugkarosserieplatte (1) befestigt ist.

4. Verkleidung- und Gerät-Installationsstruktur nach einem der Ansprüche 1 bis 3, wobei
eine Dichtung (17) zwischen dem Gerät (3) und einem Umfang des zweiten Gerät-Installationslochs (11) aufgenommen ist.

5. Verkleidung- und Gerät-Installationsverfahren zum Installieren einer Verkleidung (2) und eines Geräts (3) an einer Fahrzeugkarosserieplatte (1), wobei das Verkleidung- und Gerät-Installationsverfahren die folgenden Schritte umfasst:
Bereitstellen der Verkleidung (2) mit einem ersten Gerät-Installationsloch (11),
Bereitstellen der Fahrzeugkarosserieplatte (1) mit einem zweiten Gerät-Installationsloch (11), in welches das Gerät (3) eingeführt wird,
Einführen des Geräts (3) in das zweite Gerät-Installationsloch (11); Ineingriffbringen des Geräts (3) mit der Fahrzeugkarosserieplatte (1), so dass es relativ zu der Fahrzeugkarosserieplatte (1) um einen vorbestimmten Betrag beweglich ist;
Ausführen einer Positionseinstellung zwischen dem Gerät (3) und der Verkleidung (2) unter Verwendung einer Positionsanordnungsbegrenzungseinrichtung (16) und
Befestigen der Verkleidung (2) an der Fahrzeugkarosserieplatte (1).

## Revendications

1. Structure d'installation de garniture et d'appareil pour l'installation d'une garniture (2) et d'un appareil (3) sur un panneau (1) de carrosserie de véhicule, dans laquelle :
la garniture (2) est prévue avec un premier trou d'installation d'appareil (5) dans lequel l'appareil (3) est installé ;
le panneau (1) de carrosserie de véhicule est prévu avec un second trou d'installation d'appareil (11) dans lequel l'appareil (3) est inséré ;
l'appareil (3) est inséré dans le second trou d'installation d'appareil (11) et est positionné dans la garniture (2) par un dispositif de limitation d'agencement positionnel (16) ;
l'appareil (3) est mis en prise avec le panneau (1) de carrosserie de véhicule afin d'être mobile par rapport au panneau (1) selon une quantité prédéterminée ; et la garniture (2) est fixée au panneau (1) de carrosserie de véhicule.

2. Structure d'installation de garniture et d'appareil selon la revendication 1, dans laquelle :
le dispositif de limitation d'agencement positionnel (16) est prévu à plusieurs emplacements entre l'appareil (3) et le premier trou d'installation d'appareil (5) de la garniture (2).

3. Structure d'installation de garniture et d'appareil selon la revendication 1 ou 2, dans laquelle :
l'appareil (3) est maintenu par un collier (12) afin d'être mobile selon une quantité prédéterminée, alors que le collier (12) est fixé sur le panneau (1) de carrosserie de véhicule.

4. Structure d'installation de garniture et d'appareil selon l'une quelconque des revendications 1 à 3, dans laquelle :
un dispositif d'étanchéité (17) est pris en sandwich entre l'appareil (3) et tout autour du second trou d'installation d'appareil (11).

5. Procédé d'installation de garniture et d'appareil pour installer une garniture (2) et un appareil (3) sur un panneau (1) de carrosserie de véhicule, le procédé d'installation de garniture et d'appareil comprenant les étapes suivantes consistant à :
pourvoir la garniture (2) d'un premier trou d'installation d'appareil (11),
pourvoir le panneau (1) de carrosserie de véhicule d'un second trou d'installation d'appareil (11) dans lequel l'appareil (3) est inséré,
insérer l'appareil (3) dans le second trou d'installation d'appareil (11) ;
mettre en prise l'appareil (3) avec le panneau (1) de carrosserie de véhicule afin d'être mobile par rapport au panneau (1) de carrosserie de véhicule selon une quantité prédéterminée ;
réaliser un ajustement de position entre l'appareil (3) et la garniture (2), au moyen d'un dispositif de limitation d'agencement positionnel (16) ; et
fixer la garniture (2) sur le panneau (1) de carrosserie de véhicule.
